Europäisches Patentamt

European Patent Office

Office européen des brevets

(19)

(11) Publication number: **0 145 550**
**A2**

# (12) EUROPEAN PATENT APPLICATION

(21) Application number: **84402285.5**

(22) Date of filing: **12.11.84**

(51) Int. Cl.⁴: **A 21 D 6/00**

(30) Priority: **15.11.83 US 551893**

(43) Date of publication of application: **19.06.85**
**Bulletin 85/25**

(84) Designated Contracting States: **AT BE CH DE FR GB IT**
**LI LU NL SE**

(71) Applicant: **NABISCO BRANDS INC., Nabisco Brands**
**Plaza, Parsippany New Jersey 07054 (US)**

(72) Inventor: **Simms, Raymond Carlson, 3860 Morningstar**
**Drive, Mississuaga Ontario (CA)**
Inventor: **Michnowski, Jane Eva, 310 Liberty Street,**
**Apt. 48, Little Ferry New Jersey 07643 (US)**
Inventor: **Tancordo, Frederick Lawrence, 1624 Ellis**
**Avenue, Fair Lawn New Jersey 07410 (US)**

(74) Representative: **Bonnetat, Christian et al, Cabinet**
**PROPI Conseils 23 rue de Léningrad, F-75008 Paris (FR)**

(54) **Non-refrigerated shelf-stable cookie doughs.**

(57) The present invention provides a cookie dough which is shelf stable under non-refrigerated conditions for at least six months. Additionally, the cookie dough can be formed into discrete coherent pieces by cutting, for example, at room temperature with substantially no crumbling during its non-refrigerated shelf life. The shelf-stable cookie dough comprises a) from about 5% by weight to about 20% by weight of at least one viscous sweetener, b) from about 10% to about 25% by weight of sucrose, c) from about 13% to about 30% by weight of shortening, d) from about 25% to about 60% of flour, e) from 0 to about 3.5% by weight of an encapsulated leavening agent, f) from about 0 to about 7% by weight of an edible humectant, and g) typically from about 3% to about 25% by weight of conventional cookie texturizing and flavoring ingredients, said percentages being based upon the total weight of the dough and adding up to 100%.

ACTORUM AG

# NON-REFRIGERATED SHELF-STABLE COOKIE DOUGHS

This invention relates to a shelf-stable cookie dough which can be chub-packed and is shelf stable under non-refrigerated conditions. This invention also relates to a method for making the dough.

Packaged doughs which are shelf stable for extended periods of time under refrigerated conditions are well known. However, such products generally require defrosting or the inclusion of significant quantities of a melting point depressant to reduce defrosting times so as to obtain a readily formable dough. Additionally, they occupy valuable freezer or refrigerator space. Refrigerated shelf-stable doughs are disclosed, for example, in U.S. Patents 4,372,982 and 4,374,151.

U.S. Patent 4,372,982 discloses a dough composition for making thinly sheeted farinaceous food products such as a pie crust. Excessive browning during baking throughout 90 days of refrigerated shelf-life is avoided by use of a flour having a high starch level, low enzyme level and minimal starch damage.

U.S. Patent 4,374,151 discloses a frozen dough composition which is suitable for immediate baking when removed from the freezer. A melting point depressant, such as ethanol, is included in the dough so as to permit the dough to quickly soften in the oven as its temperature rises.

Also well known are packaged doughs and batters which are shelf stable under non-refrigerated conditions. Non-refrigerated shelf-stable batter compositions are disclosed in U.S. Patents 3,021,220, 3,753,734, and 4,022,917. Dough compositions which are shelf stable under non-refrigerated conditions are disclosed in U.S. Patents 3,769,034, 3,767,421, 3,767,422, 3,853,998 and 3,966,990. However, none of these patents teach a cookie dough which is shelf stable and sliceable into discrete pieces under non-refrigerated conditions over extended periods of time. Additionally, none of these patents disclose a pumpable dough composition.

U.S. Patent 3,021,220 discloses a pumpable batter which is shelf-stable under non-refrigerated conditions. However, the batters are high in water content and are prepared using heat sterilization, a water soluble acidic material and a microbiological inhibitor to achieve a sterile batter. A basic batter, it is disclosed, contains 0.5 to 1.5 parts by weight farinaceous material per part of water and not less than one-third part by weight sugar per part of water.

U.S. Patent 3,753,734 teaches shelf-stable pancake batters which may be stored for long periods of time without refrigeration in non-hermetic packages. The batters have a water activity of from about 0.80 to 0.90. Water soluble edible polyhydric alcohols, which may range from about 20 to 35 percent of the batter, are used to obtain the desired water activity and resultant bacteriostatic protection.

U.S. Patent 4,022,917 discloses a premixed batter which is shelf stable at room temperature. It has a pH of about 5 or less to inhibit microbial growth. An alkaline leavening agent is encapsulated in a normally water insoluble edible material to isolate it from the acidified batter.

U.S. Patent 3,769,034 discloses a dough composition of intermediate moisture for the production of flaky textured products, such as pie crusts, which doughs are shelf-stable for months under non-refrigerated storage conditions. The compositions include about 18-26% water by weight of the dough composition, about 20-35% shortening by weight, on a moisture-free basis of the dough composition and an amylaceous component. The composition includes a dough plasticizer, such as propylene glycol, dextrose, or corn syrup solids, and a mold and yeast inhibitor. The dough plasticizer is used in amounts of up to about 3% by weight on a moisture-free basis of the dough composition. Incorporation of large amounts of corn sugars is taught as a cause of excessively rapid browning.

U.S. Patent 3,767,421 discloses a dough composition which is shelf-stable under non-refrigerated conditions comprising about 30 to 75% amylaceous component by weight, about 0.5 to 20% shortening by weight, a starch tenderizing agent in an amount of from about 0.3 to 1.0% by weight, said percentages being on a moisture-free basis of the dough composition, a mold and yeast inhibitor, and about 18 to 28% overall moisture by weight of the total dough composition. The incorporation of high concentrations of sugar to stabilize intermediate moisture dough compositions, it is taught, results in very sweet products which are not very suitable for general use. The doughs produced in accordance with U.S. Patent 3,767,421 are pliable, elastic, bland intermediate moisture level doughs of the plastic and sponge type such as tortilla doughs, lexsa doughs, and potato cake doughs, pizza, bread, rolls, biscuits, and donut doughs.

U.S. Patent 3,853,998 also relates to tortilla dough shelf stability. Esters of para-hydroxybenzoic acids, it is taught, increase the shelf life of tortilla doughs under non-refrigerated conditions.

U.S. Patent 3,767,422 discloses a dough composition which is stable under non-refrigerated conditions for periods of up to 20 months. The dough compositions are partially baked, have a moisture content of from about 18% to 24% by weight, based upon the weight of the dough, and are for the production of bread-like baked goods. A shelf-stable cookie dough is not disclosed.

U.S. Patent 3,966,990 discloses a dough for puffable food products which can be stored without deterioration for periods up to about six months prior to baking. Refrigeration or freezing, it is taught, insures freshness of the dough. The dough comprises from about 30 to 70 percent by weight of a granular hydroxypropyl starch derivative, 0.5 to 10 percent by weight shortening, 0 to 2 percent by weight salt, 0 to 30% by weight other food ingredients, including corn syrup solids, and 10-40% by weight water.

The present invention provides a cookie dough which is shelf-stable under non-refrigerated conditions for at least six months. Preservatives are not required to achieve shelf stability but enhance it. Additionally, the cookie dough can be formed into discrete coherent pieces by cutting, for example, at room temperature with substantially no crumbling during its

non-refrigerated shelf life. Shelf stability is achieved by using a lower moisture content and lower water activity than those encountered with conventional refrigerated doughs to inhibit the growth of microorganisms.

In spite of the low moisture content, the cookie dough is still pumpable and can be readily packaged in a chub-pack. A chub-pack is a sleeve or casing, typically of a plastic material, which is sealed at each end. This type of packaging is widely used for packing cheeses and in the meat. industry for the packaging of sausage, salami, bologna, and the like. Pumpability and formability are obtained by controlling the initial dough viscosity with syrups and fats or shortening. The present invention also provides a process for making a packaged, non-refrigerated shelf-stable cookie dough.

The shelf stable and formable cookie dough of the present invention has a water activity of less than about 0.72, preferably less than about 0.70, and a pH of about 6.5 or above. The shelf-stable cookie dough comprises a) from about 5% by weight to about 20% by weight, preferably from about 8% to about 16% by weight of at least one corn syrup, or other viscous sweetener, for viscosity and water activity control, b) from about 10% to about 25% by weight, preferably from about 14% to about 20% by weight of sucrose, c) from about 13% to about 30% by weight, preferably from about 20% to about 25% by weight, shortening, d) from about 25% to about 60%, preferably from about 30% to about 50% by weight, flour, e) from 0 to about 3.5% by weight, preferably from about 0.5% to about 2% by weight of an encapsulated leavening agent, f) from about 0 to about 7% by weight, preferably from about 2% by weight to about 4% by weight of an edible humectant, and g) typically from about 3% to about 25% by weight of conventional cookie texturizing and flavoring ingredients, said percentages being based upon the total weight of the dough and adding up to 100%. The total moisture content of the dough ranges from about 6% to about 12% by weight, preferably from about 7% to about 10% by weight, based upon the weight of the dough. Preservatives, which include mold and yeast inhibitors, are optional in the present invention. Viscosity control, to achieve pumpability, is obtained with the at least one corn syrup and the shortening. Typically, the weight ratio of the at least one corn syrup to the shortening ranges from about 0.3 to about 1.

The shelf-stable cookie dough is prepared by admixing all materials except for the flour, fat-encapsulated leavening agent, and particulate flavorings to produce a smooth cream. The flour and fat encapsulated leavening agent are added and then mixing is continued until a substantially homogeneous mixture is obtained. The addition of the fat-encapsulated leavening agent in a second mixing stage minimizes the breakdown of the fat coating. The particulate flavoring ingredients, such as chocolate chips, are then added with minimal mixing so as to retain particle integrity. The dough is pumped to a chub-packing machine and packaged in a flexible plastic film. The product is shelf-stable for at least about six months under non-refrigerated conditions, and can be formed into coherent pieces for baking by cutting with a knife without substantial crumbling for at least six months. The shelf-stable cookie dough can also be packaged in conventional margarine-type plastic tubs and can be formed into coherent pieces by spooning.

A water activity of less than or equal to about 0.70 in the shelf-stable cookie dough of the present invention is achieved without the need for removing water or partial baking by using ingredients having a low water content or which tightly hold water. The ingredients used and their amounts should be such that the total water content, based upon the weight of all of the ingredients, ranges from about 6% to about 12%, preferably from about 7% to about 10% by weight. At water contents below about 6% by weight, the pumpability of the dough and formability of the dough deteriorate. As the moisture content increases above about 12% by weight, shelf-stability will tend to be adversely affected. Water contents within the above ranges or even above the above ranges, should be such that the water activity is less than or equal to 0.70 so as to assure the attainment of a shelf-stable product. Generally, in cookie formulations which contain water absorbing ingredients, such as peanut butter, higher water contents can be utilized because these water absorbing ingredients tend to lower the water activity of the formulation.

The corn syrup, or corn syrups and their amounts are chosen so as to obtain a cookie dough having a water activity of less than 0.72, preferably less than about 0.7. In addition to controlling water activity, the corn syrups are used to control the viscosity of the dough. These syrups improve pumpability of the dough by lowering its viscosity. Generally, the less viscous the corn syrup, the less viscous the dough. Accordingly, high fructose corn syrups can be used to reduce dough viscosities for easier pumping. The more viscous corn syrups tend to reduce pumpability compared to the pumpability obtained with high fructose corn syrup. However, as the viscosity of the corn syrups increases, the doughs tend to become more coherent and accordingly more sliceable into discrete coherent pieces. Suitable corn syrups for use in the shelf-stable cookie doughs of the present invention have a dextrose equivalent (DE) of about 36 to about 71. The dextrose equivalent is defined as the percentage of reducing sugars in the syrup, calculated as dextrose, on a dry weight or dry substance basis, according to the Handbook of Sugars, 2nd Edition, Pancoast et al, AVI Publishing Company, Inc., Westport, CT, p. 172 (1980). Suitable high fructose corn syrups which can be used in the shelf stable cookie doughs of the present invention have solids contents of about 68% to about 82% by weight.

The shelf-stable cookie doughs of the present invention comprise from about 5% to about 20% by weight, preferably from about 8% to about 16% by weight of the one or more corn syrups, including high fructose corn syrup. At amounts below about 5% by weight, the doughs tend to become too viscous to be pumped. They also tend to crumble excessively upon slicing. At amounts above about 20% by weight, the moisture contents of the doughs tend to be too high so as to impair shelf stability. The risk of excessive spreading of the dough during baking also increases at excessively high levels of the corn syrup or syrups.

A mixture of corn syrup and high fructose corn syrup is preferred for optimum control over pumpability and sliceability of the shelf-stable cookie dough. Suitable relative amounts are about 30% by weight to about 70% by weight high fructose corn syrup, based upon the total weight of corn syrup and high fructose corn syrup.

Other edible viscous sweeteners which can be substituted in whole or in part for the one or more corn syrups include invert syrup, aqueous solutions of corn syrup solids, mixtures thereof and the like.

The shelf-stable dough of the present invention also comprises sucrose which acts as a natural preservative in the dough and which also serves to provide oven spread and a crispy texture to the baked good. The amount of sucrose is suitably from about 10 to about 25% by weight, preferably from about 14 to about 20% by weight, based upon the total weight of the dough.

Suitable fats and shortening are those conventionally used in the production of cookies and include animal fats such as lard, and tallow, hydrogenated animal oils, solid vegetable oils such as hydrogenated vegetable shortenings, such as corn oil, peanut oil, coconut oil and soybean oil. Mixtures of fats or shortenings can also be used. They may be emulsified or stabilized with mono glycerides or mono- and diglycerides, or other known emulsifiers. Commercially available emulsified or stabilized shortenings typically contain from about 2.25 to about 2.75% emulsifier by weight. The shortening or fats should normally be solid at room temperature or above so as to avoid leakage from chub packaging and to provide firmness to the dough which enhances sliceability. Mechanical heat generated by low shear mixing fluidizes the fats or shortening which facilitates pumpability of the dough. Once packaged and held under ambient conditions, the dough increases in firmness as a result, it is believed, of fat or shortening solidification or crystallization. Fats or shortening which melt or become pourable at temperatures of about 85°F to about 110°F, for example, are suitable for use in compositions of the present invention.

The shortening or fat is used in an amount from about 13% to about 30% by weight, preferably from about 20% to about 25% by weight, based upon the total weight of the dough. The shortening or fat and the at least one corn syrup are used to control the viscosity so as to achieve a pumpable dough composition. Typically, the weight ratio of the total weight of the one or more corn syrups to the fat or shortening ranges from about 0.3 to about 1 to obtain a readily pumpable composition which can be formed into pieces by cutting, for example, during its shelf-life.

The flour is used in an amount of from about 25% to about 60% by weight, preferably from about 30% to about 50% by weight, based upon the total weight of the dough composition. The flour should preferably be a low protein content flour, which typically has a protein content of about 6.0 to about 9.0% by weight to reduce imbibing of the water supplied by the corn syrups. Wheat flour is preferred but other flours conventionally used in the preparation of cookies can also be utilized in the present invention. Gelatinization, by heating, of a portion of the starch of the flour is not necessary to achieve a shelf-stable product even under non-refrigerated conditions.

The low moisture content, low water activity, the at least one corn syrup, the sugars, and the neutral to alkaline pH of the dough of the present invention make it unnecessary to include artificial preservatives or mold and yeast inhibitors for the attainment of a shelf-stable product even under non-refrigerated conditions. Molds grow at low moisture levels but a neutral or alkaline pH is unfavorable to mold growth. A pH of from about 6.5 to 8.0 is preferred in the dough compositions of the present invention. The pH is measured for a 10% by weight aqueous solution of the cookie dough. Edible organic or inorganic acids, such as citric, malic, or phosphoric acid or salts thereof and/or edible alkaline materials such as the carbonates of sodium and calcium can be used to obtain a desired pH.

An antioxidant in conventional amounts can be used to enhance shelf stability over extended periods of time. Exemplary of antioxidants are ascorbyl palmitate, Vitamin E as dl-alpha tocopherol, BHA, BHT, and TBHQ and mixtures thereof. Suitable amounts of antioxidants typically range from about 0.01% to about 0.1% by weight, based upon the weight of the fat or shortening.

Optional antimicrobial agents include sodium benzoate, benzoic acid, sorbic acid, calcium propionate, sodium propionate, potassium sorbate, calcium sorbate, and the like. These preservatives can be used in conventional amounts which generally range from about 0.15% to about 0.30% by weight, based upon the weight of the dough composition. The preservatives may be used alone or in combination with preservatives such as sugar or corn

0145550

syrup, and antioxidants.

Leavening of the dough prior to packaging by the use of yeast is undesirable because of extended processing times. Additionally, excessive gas production by the leavening can be detrimental to package integrity.

Chemical leavening agents which are only nominally active at room temperature and are activated by heat during baking contain a carbonate or bicarbonate salt and optionally an acidifier. However, even the nominal activity of these chemical leavening agents at room temperature is undesirable in a cookie dough which is packaged in a chub pack. In a chub pack, the dough is packaged with essentially no air space. Accordingly, over extended periods of time, the leavening activity would create undesirable pressures within the package which could lead to swelling and leaks in the packaging. Even though the doughs of the present invention are of low moisture content, the amount of water is sufficient so that reaction between the carbonate or bicarbonate and the acidifier would occur over time.

Although the dough compositions of the present invention can be made without any leavening agent, incorporation of the leavening agent is preferred so as to obtain less dense products upon baking and to enhance consumer appeal. In the compositions of the present invention the leavening ingredients are protected from the moisture in the dough until the baking operation. Commercially available fat- or shortening-encapsulated leavening agents can be used. The carbonate or bicarbonate and optional acidifier should be encapsulated to avoid premature reaction. The encapsulated leavening ingredients are used in conventional

13 0145550

amounts which generally range up to about 3.5% by weight, preferably from about 0.5% by weight to about 2% by weight of the dough.

To avoid the risk of "hot spots" or local concentrations of leavening agents, which are evident as brownish spots in the cookie dough or baked cookie, finely granulated leavening agents should be used. Suitable for use are leavening agents having a sieve analysis of less than about 40% by weight retained on a 40 mesh screen or finer.

Optional humectants, such as molasses, honey, glycerine, humectant gums, humectant gels, and mixtures thereof, can also be included in the shelf-stable dough compositions of the present invention. The humectants reduce moisture migration to water imbibing ingredients which tends to enhance sliceability of the dough. The humectant should be used in an amount which does not adversely affect the flavor, color, or texture of the cookie. Suitable amounts of the optional humectant range up to about 7% by weight, preferably from about 2% by weight to about 4% by weight, based upon the weight of the dough.

The texturizing and flavoring ingredients are those conventionally used in the production of drop-type cookies. They are employed in conventional amounts and typically range from about 3% by weight up to about 25% by weight, based upon the weight of the cookie dough. Exemplary of drop-type cookies are sugar cookies, butter cookies, chocolate chip cookies, peanut butter cookies, oatmeal/granola cookies and oatmeal cookies.

Typical cookie flavoring and texturizing ingredients include emulsifiers such as sorbitan monostearate, mono- and/or di-glycerides, polyoxyethylene sorbitan fatty acid esters, such as polysorbate 60 (polyoxyethylene(20)sorbitan monostearate), and sodium stearoyl-2-lactate. They also include salt, whole egg powder, egg white powder, milk powders, pregelatinized starches such as pregelatinized corn, wheat, or waxy maize starch, peanut butter, peanut flour, vanilla, cocoa, spices such as cinnamon and nutmeg, particulate flavoring ingredients such as chocolate or butterscotch chips, cereal grains such as oats and rice, raisins, and nut meats. Commercially available chips which are coated with an edible shellac are preferred for reduced smearing into the dough during mixing or pumping.

The shelf-stable cookie doughs of the present invention can be made by combining the ingredients in conventional manner using a creaming stage, and a dough-forming stage. The fat-encapsulated leavening agent should be added in the dough forming stage to minimize breakdown of the fat encapsulant. The particulate flavoring ingredients which are intended to maintain their integrity but which tend to smear upon mixing, such as chocolate chips, butterscotch chips and the like should be added last. They are added with minimal mixing so as to distribute them substantially uniformly through the dough without substantial destruction of the integrity of the particles. Generally, all of the wet ingredients such as the at least one corn syrup, liquid flavoring and texturizing ingredients, liquid humectants such as molasses and honey, the shortening, and the sucrose are creamed together to form a substantially homogeneous mixture. Mixing is typically performed at ambient temperatures of about 65°F to about 85°F without external heating. Suitable mixers include vertical and horizontal mixers, such as conventional bakery-type Hobart mixers.

In the dough forming stage, the flour and encapsulated leavening agent are added to the creamed mixture and mixing is continued until the dough clears to obtain a substantially homogeneous dough. The dry flavoring and texturizing ingredients and humectants can be added in either the creaming stage or the dough forming stage. The particulate flavoring ingredients are then added to the dough with minimal mixing.

The thus obtained dough should be packaged within a reasonably short time, preferably within one hour, most preferably immediately, so as to avoid drying out of the cookie dough.

For packaging in a chub-pack, the dough is transferred, by conveyor for example, to the hopper of a conventional twin auger feeder, which feeds the dough to a positive displacement pump. The pump feeds the dough to a conventional chub-packing machine. The shelf-stable cookie doughs of the present invention are readily pumpable at pump pressures of about 150 to 200 psi. Lower or higher pressures, however, can be used. They should be high enough so as to permit continuous operation. However, excessive pressures may cause fat or shortening separation or bleed from the dough. To reduce the risk of separation at high pumping pressures, stabilized or emulsified shortening can be used. Additionally, minimizing the distance which the dough is pumped to the packaging device reduces the risk of fat or shortening separation.

A suitable chub-packing machine is manufactured by The Kartridg Pak Co. The pump which is optionally provided with these types of machines is not needed. The cookie dough is pumped into a formed plastic film sleeve formed by the chub-packing machine. The sleeve is automatically sealed by the machine by clipping each end with preformed wire clips around each end to obtain a relatively air-tight seal. The sealed package is automatically then cut by the machine at its attached upper end. Typical chub-packing mechanisms and machines are disclosed in U.S. Patents 3,149,447, 3,380,226 and 3,795,083. Conventional plastic packaging materials, such as those used for the packaging of refrigerated chub-packed cookie doughs and cheeses, can be used. Typically, the chub packed dough is about 2 inches in diameter, is about 8 inches long and weighs about 400 grams.

When packaged in a chub-pack, the cookie dough of the present invention may be formed for subsequent baking by cutting the dough into disc-shaped pieces as are the chub-packed refrigerated cookie doughs.

The shelf-stable cookie doughs of the present invention may also be packaged by pumping the dough into conventional margarine-style plastic tubs with heat sealable membranes or in-line thermoform/fill/seal type containers. When packaged in this manner, the dough composition is spooned onto a baking sheet. Other conventional packages, which are suited to the end use application of the dough, such as slicing or scooping into pieces can be used. The packaging, however, should be a barrier to moisture and oxygen, should not permit the escape of shortening or fats, and preferably should be a barrier to light. Additionally, the packaging should be capable of being tightly packed with a minimum of head space.

The cookie dough may also be packaged in appropriate conventional cartridges for use with automatic cookie forming machines to produce a variety of shapes.

The shelf-stable cookie doughs of the present invention may also be formed into pieces and then packaged. In this embodiment, the pieces can be stacked and optionally separated by conventional non-stick packaging materials such as wax paper or plastic film. Formation of the dough into pieces can be performed with a Fay machine, where the dough is pressed into disc-shaped cavities, or with conventional wire-cut machinery.

Cookie baking temperatures and times for the doughs of the present invention are generally comparable to those conventionally used in the production of home-baked cookies. Typical temperatures range from about 350°F to about 375°F. Somewhat shorter baking times or lower baking temperatures may be desirable in view of the low moisture content of the doughs of the present invention. Typical cookie baking times range from about 7 minutes to about 15 minutes, depending upon the number of cookies being baked, the thickness of the cookie, the shape of the cookie, the size of the cookie, the oven temperature, the cookie ingredients and the texture desired.

The present invention is further illustrated by the following examples in which all parts, proportions and percentages are by weight and all temperatures are in °F unless otherwise indicated:

## EXAMPLE 1

The ingredients and their relative amounts, based upon the weight of the dough, used to prepare a chocolate chip cookie dough are:

| INGREDIENT | WEIGHT PERCENT |
|---|---|
| High Fructose Corn Syrup (about 72% solids, 42% fructose 50% dextrose) | 10 |
| Sugar (Sucrose) | 14.5 |
| Shortening (melting point of about 106°F) | 23 |
| Flour | 35 |
| Chocolate Chips | 9 |
| Fat-encapsulated Soda (Sodium Bicarbonate) | 1 |
| Molasses | 0.5 |
| Salt, Sodium Monostearate, Polysorbate 60, Sodium Stearoyl-2-lactate, and flavor | 2.5 |
| Other Minor Flavoring and Texturizing Ingredients (pregelatinized corn starch, egg white powder, milk powder) | 4.5 |
| | 100 |

The high fructose corn syrup, sugar, shortening, molasses, salt, sodium monostearate, polysorbate 60, sodium stearoyl-2-lactate, and flavor are mixed together to produce a smooth cream. The flour, other minor texturizing and flavoring ingredients, and fat-encapsulated leavening agent are added to the creamy

0145550

mixture and mixing is continued to obtain a substantially homogeneous dough. The fat encapsulated sodium bicarbonate had a typical sieve analysis of "20 mesh 1.4% by weight retained, 40 mesh 36% by weight retained, 60 mesh 54% by weight retained, 80 mesh 7.5% by weight retained, 100 mesh 1% by weight retained, and 140 mesh 0.3% by weight retained." The chocolate chips are then added to the dough with minimal mixing to distribute the chips substantially uniformly throughout the dough. This final dough is transferred to a hopper and then fed by means of a pump feeder having a twin auger to a 2 hp positive displacement Waukesha pump. The dough is pumped to a Kartridg Pak chub-packing machine where it is packaged into a chub-pack approximately eight inches long by about 2 inches in diameter. The final dough was analyzed by conventional means, and was found to have a moisture content of about 7.3% by weight, and a water activity of about 0.63. The pH of a 10% by weight aqueous solution of the final dough was about 7.0. The packaged dough was subjected to a shelf-life test at a temperature of 72°F for 6 months. The aged dough was found to have a total plate count of 10,000, a yeast and mold count of 10, and a coliform count of 0. The aged dough was subjected to a sliceability, or cuttability, test by peeling back the plastic package and cutting the dough with an ordinary serrated edge kitchen knife on a hard surface into disc-shaped pieces of about 3/8" thickness. Substantially no crumbling of the dough was observed during cutting. The disc-shaped dough pieces were placed in an oven and baked for about 10 minutes at 375°F. The dough pieces exhibited satisfactory oven spread. Discolored spots were not observed on the baked pieces.

## EXAMPLE 2

The ingredients and their relative amounts, based upon the weight of the dough, used to prepare a peanut butter cookie dough are:

| INGREDIENT | WEIGHT PERCENT |
|---|---|
| High Fructose Corn Syrup (about 72% solids, 42% fructose, 50% dextrose) | 9 |
| Sugar (Sucrose) | 23 |
| Shortening | 17 |
| Flour | 28 |
| Peanut Butter | 16 |
| Fat-encapsulated Sodium Bicarbonate | 1 |
| Molasses | 1.5 |
| Salt, Sodium monostearate, Polysorbate 60, and sodium stearoyl-2-lactate | 1 |
| Other Minor Flavoring and Texturizing Ingredients (pregelatinized corn starch, egg white powder, milk powder) | 3.5 |
| | 100 |

The high fructose corn syrup, peanut butter, sugar, shortening, molasses, salt, sodium monostearate, polysorbate 60 and sodium stearoyl-2-lactate are mixed together to produce a smooth cream. The flour, other minor flavoring and texturizing ingredients, and fat-encapsulated leavening agent are added to the creamy mixture and mixing is continued to obtain a substantially homogeneous dough. The leavening agent had a sieve analysis as in Example 1. The dough is pumped to a Kartridg Pak chub-packing machine where it is packaged into a chub-pack as in Example 1.  The dough was analyzed as in Example 1, and was found to have a moisture content of about 7% by weight, and a water activity of about 0.63.  The pH of a 10% by weight aqueous solution of the dough was about 7.2.  A shelf-stability and sliceability test were performed as in Example 1.  The aged dough was found to have a total plate count of 380, a yeast and mold count of 70, and a coliform count of 0.  The aged dough exhibited some crumbling during slicing.  Disc-shaped dough pieces were placed in an oven and baked for about 10 minutes at 375°F.  The dough pieces exhibited satisfactory oven spread.  Discolored spots were not observed on the baked goods.


## EXAMPLE 3

The ingredients and their relative amounts, based upon the weight of the dough, used to prepare an oatmeal cookie dough are:


| INGREDIENT | WEIGHT PERCENT |
|---|---|
| High Fructose Corn Syrup (about 72% solids, 42% fructose, 50% dextrose) | 10.5 |
| Sugar (Sucrose) | 16 |
| Shortening | 22 |
| Flour | 32 |
| Oats | 12 |
| Molasses | 1.0 |
| Fat-encapsulated Soda | 1.0 |
| Salt, Sodium Monostearate, Polysorbate 60, sodium stearoyl-2-lactate and Flavoring | 2.0 |

| Other Minor Flavoring and Texturizing Ingredients (pregelatinized corn starch, egg white powder, and butter flavor) | 3.5 |
|---|---|
| | 100 |

The high fructose corn syrup, sugar, shortening, molasses, salt, sodium monostearate, polysorbate, sodium stearoyl-2-lactate, and flavoring are mixed together to produce a smooth cream. The oats are blended with half of the flour and then added to the creamed mixture. Mixing is continued to distribute the oats substantially uniformly throughout the mixture. The remaining flour, other minor flavoring and texturizing ingredients, and fat-encapsulated leavening agent are added to the creamy mixture and mixing is continued to obtain a substantially homogeneous dough. The leavening agent had a sieve analysis as in Example 1. The dough is pumped to a Kartridg Pak chub-packing machine where it was packaged into a chub-pack as in Example 1. The dough was analyzed by conventional means, and was found to have a moisture content of about 8.7% by weight, and a water activity of about 0.66. The pH of a 10% by weight aqueous solution of the dough was about 7.2. A shelf-stability test and sliceability test were performed as in Example 1. The aged dough was found to have a total plate count of 260, a yeast and mold count of 20, and a coliform count of 0. The aged dough exhibited some crumbling during slicing. Disc-shaped dough pieces were placed in an oven and baked for about 10 minutes at 375°F. The dough pieces exhibited satisfactory oven spread. Discolored spots were not observed on the baked goods.

## EXAMPLE 4

The ingredients and their relative amounts, based upon the weight of the dough, used to prepare a sugar cookie dough are:

| INGREDIENT | WEIGHT PERCENT |
|---|---|
| High Fructose Corn Syrup (about 72% solids, 42% fructose, 50% dextrose) | 9.5 |
| Sugar (Sucrose) | 16 |
| Shortening | 24 |
| Flour | 46 |
| Fat-encapsulated Soda | 1 |
| Salt, Sodium Monostearate, Polysorbate 60, sodium stearoyl-2-lactate and Flavoring | 1 |
| Other Minor Flavoring and Texturizing Ingredients (pregelatinized corn starch, egg white powder and butter flavor) | 2.5 |
| | 100 |

The high fructose corn syrup, sugar, shortening, salt, sodium monostearate, polysorbate 60, sodium stearoyl-2-lactate and flavoring are mixed together to produce a smooth cream. The flour, other minor flavoring and texturizing ingredients, and fat-encapsulated leavening agent are added to the creamy mixture and mixing is continued to obtain a substantially homogeneous dough. The sieve analysis of the soda was as in Example 1. The dough is pumped to a Kartridg Pak chub-packing machine and packaged into a chub-pack as in Example 1. The dough was analyzed by conventional means, and was found to have a moisture content of about 9.3% by weight, and a water activity of about 0.7. The pH of a 10% by weight aqueous solution of the dough was about 7.2.

A shelf-stability test and sliceability test were performed as in Example 1. The aged dough was found to have a total plate count of 420, a yeast and mold count of 40, and a coliform count of 0. The aged dough exhibited substantially no crumbling during slicing. The disc-shaped dough pieces were placed in an oven and baked for about 10 minutes at 375°F. The dough pieces exhibited satisfactory oven spread.

## EXAMPLE 5

The ingredients and their relative amounts, based upon the weight of the dough, used to prepare a chocolate chip cookie dough are:

| INGREDIENT | WEIGHT PERCENT |
|---|---|
| High Fructose Corn Syrup (about 72% solids, 42% fructose 50% dextrose) | 8 |
| Corn Syrup, 64 DE/43° Be | 8 |
| Sugar (Sucrose) | 14 |
| Shortening (melting point of about 106°F) | 22 |
| Flour | 33 |
| Chocolate Chips | 8.5 |
| Fat-encapsulated Soda | 1 |
| Molasses | 0.5 |
| Salt, Sodium Monostearate, Polysorbate 60, and flavor | 0.5 |
| Other Minor Flavoring and Texturizing Ingredients (sodium stearoyl-2-lactate, pregelatinized corn starch, egg white powder, milk powder) | 4.5 |
| | 100 |

The high fructose corn syrup, corn syrup, sugar, shortening, molasses, salt, sodium monostearate, polysorbate 60 and flavor are mixed together to produce a smooth cream. The flour, other minor texturizing and flavoring ingredients, and fat-encapsulated leavening agent are added to the creamy mixture and mixing is continued to obtain a substantially homogeneous dough. The fat encapsulated sodium bicarbonate had a sieve analysis as in Example 1. The chocolate chips are then added to the dough with minimal mixing to distribute the chips substantially uniformly throughout the dough. This final dough is transferred to a hopper and then fed by means of a pump feeder having a twin auger to a 2 hp positive displacement Waukesha pump. The dough is pumped to a Kartridg Pak chub-packing machine where it is packaged into a chub-pack approximately eight inches long by about 2 inches in diameter. The final dough was analyzed by conventional means, and was found to have a moisture content of about 8% by weight, and a water activity of about 0.65. The packaged dough was stored at a temperature of about 72°F. After four months, the dough was subjected to a sliceability, or cuttability, test as in Example 1. Substantially no crumbling of the dough was observed during cutting. The disc-shaped dough pieces were placed in an oven and baked for about 10 minutes at 375°F. The dough pieces exhibited satisfactory oven spread and the baked goods did not exhibit discolored spots.

EXAMPLE 6

The ingredients and their relative amounts, based upon the weight of the dough, used to prepare a peanut butter cookie dough are:

| INGREDIENT | WEIGHT PERCENT |
|---|---|
| High Fructose Corn Syrup (about 72% solids 42% fructose, 50% dextrose) | 8 |
| Corn Syrup 64 DE/43°Be | 8 |
| Sugar (Sucrose) | 21 |
| Shortening (melting point of about 106°F) | 16 |
| Flour | 25 |
| Peanut Butter | 15 |
| Fat-encapsulated Soda | 1 |
| Molasses | 2 |
| Salt, Sodium monostearate and Polysorbate 60 | 0.5 |
| Other Minor Flavoring and Texturizing Ingredients (sodium stearoyl-2-lactate, pregelatinized corn starch, egg white powder, milk powder) | 3.5 |
| | 100 |

The high fructose corn syrup, corn syrup, peanut butter, sugar, shortening, molasses, salt, sodium monostearate, and polysorbate 60 are mixed together to produce a smooth cream. The flour, other minor flavoring and texturizing ingredients, and fat-encapsulated leavening agent are added to the creamy mixture and mixing is continued to obtain a substantially homogeneous dough. The leavening agent had a sieve analysis as in Example 1. The dough is pumped to a Kartridg Pak chub-packing machine where it is packaged into a chub-pack as in Example 1. The dough was analyzed as in Example 1, and was found to have a moisture content of about 8.4% by weight, and a water activity of about 6.1. The packaged dough was stored at a temperature of about 72°F. After four months the dough was subjected to a sliceability test as in Example 1. Substantially less crumbling of the dough was observed during cutting compared to the crumbling observed with the peanut butter dough of Example 2. The disc-shaped dough pieces were placed in an oven and baked for about 10 minutes at 375°F. The dough pieces exhibited satisfactory oven spread and the baked goods did not exhibit discolored spots.

## EXAMPLE 7

The ingredients and their relative amounts, based upon the weight of the dough, used to prepare an oatmeal cookie dough are:

| INGREDIENT | WEIGHT PERCENT |
|---|---|
| High Fructose Corn Syrup (about 72% solids, 42% fructose, 50% dextrose) | 8 |
| Corn Syrup, 64 DE/43° Be | 8 |
| Sugar (Sucrose) | 15 |
| Shortening (melting point of about 106°F) | 21 |
| Flour | 30 |
| Oats | 12 |
| Molasses | 1 |
| Fat-encapsulated Sodium Bicarbonate | 1 |
| Salt, Sodium Monostearate, Polysorbate 60, and Flavoring | 2 |

Other Minor Flavoring and Texturizing
    Ingredients (Sodium Stearoyl-2-lactate,
    pregelatinized corn starch, egg white
    powder)                                         2
                                                   ———
                                                   100

The high fructose corn syrup, corn syrup, sugar, shortening, molasses, salt, sodium monostearate, polysorbate, and flavoring are mixed together to produce a smooth cream. The oats are then added and mixing is continued to distribute the oats substantially uniformly throughout the mixture. The flour, other minor flavoring and texturizing ingredients, and fat-encapsulated leavening agent are added to the creamy mixture and mixing is continued to obtain a substantially homogeneous dough. The leavening agent had a sieve analysis as in Example 1. The dough is pumped to a Kartridg Pak chub-packing machine where it is packaged into a chub-pack as in Example 1. The dough was analyzed by conventional means, and was found to have a moisture content of about 9.2% by weight, and a water activity of about 6.3. The packaged dough was stored at a temperature of about 72°F. After four months the dough was subjected to a sliceability test as in Example 1. Substantially less crumbling of the dough was observed during cutting compared to the crumbling observed with the oatmeal dough of Example 3. The disc-shaped dough pieces were placed in an oven and baked for about 10 minutes at 375°F. The dough pieces exhibited satisfactory oven spread and the baked goods did not exhibit discolored spots.

EXAMPLE 8

The ingredients and their relative amounts, based upon the weight of the dough, used to prepare a sugar cookie dough are:

| INGREDIENT | WEIGHT PERCENT |
|---|---|
| High Fructose Corn Syrup (about 72% solids, 42% fructose, 50% dextrose) | 8 |
| Corn Syrup, 64 DE/43° Be | 8 |
| Sugar (Sucrose) | 15 |
| Shortening (melting point of about 106°F) | 22 |
| Flour | 43 |
| Fat-encapsulated Sodium Bicarbonate | 1 |
| Salt, Sodium Monostearate, Polysorbate 60 and Flavoring | 1 |
| Other Minor Flavoring and Texturizing Ingredients (Sodium stearoyl-2-lactate, pregelatinized corn starch, egg white powder) | 2 |
| | 100 |

The high fructose corn syrup, corn syrup, sugar, shortening, salt, sodium monostearate, polysorbate 60, and flavoring are mixed together to produce a smooth cream. The flour, other minor flavoring and texturizing ingredients, and fat-encapsulated leavening agent are added to the creamy mixture and mixing is continued to obtain a substantially homogeneous dough. The sieve analysis of the encapsulated soda was the same as in Example 1. The dough is pumped to a Kartridg Pak chub-packing machine and packaged into a chub-pack as in Example 1. The dough was analyzed by conventional means, and was found to have a moisture content of about 8.8% by weight, and a water activity of about 6.7. The packaged dough was stored at a temperature of 72°F. After four months, the dough was subjected to a sliceability test as in Example 1. Substantially no crumbling of the dough was observed during cutting. The disc-shaped dough pieces were placed in an oven and baked for about 10 minutes at 375°F. The dough pieces exhibited satisfactory oven spread and the baked goods did not exhibit discolored spots.

WHAT IS CLAIMED IS:

1.    A shelf-stable cookie dough which is shelf stable under non-refrigerated conditions comprising:

    a.    from about 5% by weight to about 20% by weight of at least one edible viscous sweetener,

    b.    from about 10% to about 25% by weight of sucrose,

    c.    from about 13% to about 30% by weight shortening,

    d.    from about 25% to about 60% by weight flour,

    e.    from 0 to about 3.5% by weight of an encapsulated leavening agent, and

    f.    from about 0% to about 7% of an edible humectant, all of said percentages being based upon the weight of the cookie dough, the total moisture content of the cookie dough being from about 6% to about 12% by weight, said cookie dough having a water activity of less than about 0.72.

2. A shelf-stable cookie dough as claimed in claim 1 wherein said at least one edible viscous liquid sweetener is a mixture of corn syrups.

3. A shelf-stable cookie dough as claimed in claim 2 wherein said at least one corn syrup comprises a corn syrup having a dextrose equivalent value of about 36 to about 71 and a high fructose corn syrup.

0145550

4. A shelf-stable cookie dough as claimed in claim 3 wherein from about 30% by weight to about 70% by weight, based upon the total weight of corn syrup and high fructose corn syrup, is high fructose corn syrup.

5. A shelf-stable cookie dough as claimed in claim 1 wherein the amount of encapsulated leavening agent is from about 0.5% by weight to about 2% by weight.

6. A shelf-stable cookie dough as claimed in claim 1 which is a chocolate chip cookie dough.

7. A shelf-stable cookie dough as claimed in claim 1 which is a sugar cookie dough.

8. A shelf-stable cookie dough as claimed in claim 1 which is a peanut butter cookie dough.

9. A shelf-stable cookie dough as claimed in claim 1 which is an oatmeal cookie dough.

10. A shelf-stable cookie dough as claimed in claim 1 wherein the humectant is present in an amount of from about 2% by weight to about 4% by weight.

0145550

11. A process for making a shelf-stable cookie dough which is shelf stable under non-refrigerated conditions comprising:

 a. creaming together from about 5% by weight to about 15% by weight of at least one edible viscous sweetener, from about 10% to about 25% by weight of sucrose, from about 13% to about 30% by weight shortening, and from about 0% to about 7% of a humectant to form a substantially homogeneous mixture,

 b. blending said substantially homogeneous mixture with from about 25% to about 60% by weight flour, and from 0 to about 3.5% by weight of an encapsulated leavening agent to form a dough, and

 c. pumping the dough of step (b) to a packaging device, all of said percentages being based upon the weight of the cookie dough, the total moisture content of the cookie dough being from about 6% to about 12% by weight, said cookie dough having a water activity of less than about 0.72.

12. A process as claimed in claim 11 wherein the dough is packaged in a plastic sleeve sealed at each end with wire clips.

13. A process as claimed in claim 11 wherein said at least one edible viscous sweetener is a mixture of corn syrups.

14. A process as claimed in claim 11 wherein said at least one edible viscous sweetener comprises a corn syrup having a dextrose equivalent value of about 36 to about 71 and a high fructose corn syrup.

15. A process as claimed in claim 14 wherein from about 30% by weight to about 70% by weight, based upon the total weight of corn syrup and high fructose corn syrup, is high fructose corn syrup.

16. A process as claimed in claim 11 wherein the amount of encapsulated leavening agent is from about 0.5% by weight to about 2% by weight.

17. A process as claimed in claim 11 which is a chocolate chip cookie dough.

18. A process as claimed in claim 11 which is a sugar cookie dough.

19. A process as claimed in claim 11 which is a peanut butter cookie dough.

20. A process as claimed in claim 11 which is an oatmeal cookie dough.

21. A process as claimed in claim 11 wherein the humectant is present in an amount of from about 2% by weight to about 4% by weight.

22. A process as claimed in claim 11 wherein the ratio of the total weight of the at least one viscous sweetener to the weight of the shortening ranges from about 0.3 to about 1.